# FASCICULE DE BREVET EUROPEEN

(11) **EP 0 575 911 B1**
(45) Date de publication et mention de la délivrance du brevet: **07.02.1996**
(21) Numéro de dépôt: 93109782.8
(22) Date de dépôt: 18.06.1993
(51) Int. Cl.: H02P 5/418, H02P 5/175

(54) **Dispositif d'asservissement de la vitesse d'un moteur électrique et son procédé de fonctionnement**
Vorrichtung zur Geschwindigkeitsregelung eines elektrischen Motors und Verfahren zur Durchführung
Speed control device of an electric motor and method of operation

(30) Priorité: 22.06.1992 FR 9207596
(43) Date de publication de la demande: 29.12.1993
(73) Titulaire: MOULINEX S.A., F-93170 Bagnolet (FR)
(72) Inventeur: Arroubi, Mustapha, F-14120 Lully (FR)
(74) Mandataire: May, Hans Ulrich, Dr.

(56) Documents cités:
- FR-A- 2 564 998
- PATENT ABSTRACTS OF JAPAN vol. 10, no. 297 (E-444) (2353) 9 Octobre 1986 & JP-A-61 112 586 (BROTHER IND LTD) 30 Mai 1986
- PATENT ABSTRACTS OF JAPAN vol. 10, no. 297 (E-444) (2353) 9 Octobre 1986 & JP-A-61 112 586

## Description

L'invention concerne un dispositif d'asservissement numérique de la vitesse d'un moteur électrique comportant un élément commutateur, tel qu'un triac, monté en série avec le moteur aux bornes d'un réseau alternatif de distribution électrique et dont l'angle d'ouverture définie des valeurs correspondantes à une vitesse de consigne déterminée, un capteur tachymétrique en liaison avec le moteur et destiné à émettre des impulsions images de la vitesse du moteur ainsi qu'un microcontrôleur comprenant un générateur de signaux à fréquence constante, des moyens de comptage d'un premier compteur s'incrémentant automatiquementet dont le décompte est subordonné à au moins une période des impulsions images pour calculer la vitesse réelle du moteur, un espace mémoire contenant N valeurs de vitesses de consigne désirées comprises entre une vitesse minimum V_{MINI} et une vitesse maximum V_{MAXI}, des moyens de comparaison entre la vitesse de consigne désirée et la vitesse réelle du moteur, des moyens de traitement de l'information issue des moyens de comparaison et des moyens de conversion de l'information analysée destinés à commander l'angle d'ouverture de l'élément commutateur.

Dans les dispositifs d'asservissement numérique de vitesse, connus de ce genre, le microcontrôleur compare la vitesse réelle du moteur électrique avec une valeur de vitesse de consigne déterminée et apporte, s'il y a lieu, une correction sur la valeur de l'angle d'ouverture de l'élément commutateur du dispositif d'asservissement de la vitesse en fonction de l'écart mesuré, entre la vitesse réelle du moteur et la valeur de la vitesse de consigne sélectionnée. Ladite correction déclenche un incrément ou un décrément de la valeur de l'angle d'ouverture correspondant à une valeur de vitesse de consigne déterminée et se traduit par une variation de la vitesse entraînant souvent des saccades ou un phénomène de pompage notamment en basses vitesses. D'autre part, lors des variations importantes de l'angle d'ouverture, les brusques augmentations de tension peuvent entraîner une détérioration du moteur.

Un tel état de la technique est connu de la demande de brevet FR-A-2564998.

Le but de l'invention est de remédier aux inconvénients précités en mettant en oeuvre un dispositif d'asservissement numérique de vitesse simple, rapide et très fiable.

Le dispositif selon l'invention est défini par la revendication 1, et des modes préférentiels de realisation du dispositif par les revendications 2 à 7. La revendication 8 définit une utilisation du dispositif. Le procédé de fonctionnement selon l'invention est défini par la revendication 9, des modes preferentiels de ce procédé étant définis par les revendications 10 et 11.

Grâce au dispositif d'asservissement selon l'invention, la vitesse réelle du moteur est contrôlée et corrigée, pendant toute la phase de fonctionnement du moteur, pour éviter toute perturbation qui pourrait nuire, d'une part, à la durée de vie du moteur et, d'autre part, à la quiétude de l'utilisateur et pour assurer une régulation continue de la vitesse réelle du moteur. De cette manière, le moteur réagit, selon une variation énergétique en liaison avec l'angle d'ouverture de l'élément commutateur, ladite variation étant réalisée par une régulation de puissance en introduisant une notion d'incrément énergétique qui permet de se rapprocher d'une correction Δ W/W = Cste et non pas par une régulation angulaire en appliquant un angle d'ouverture déterminé à l'élément commutateur imposant ainsi une puissance non idéale.

Les caractéristique et avantages de l'invention ressortiront d'ailleurs de la description qui va suivre, à titre d'exemple, en référence aux dessins annexés dans lesquels :

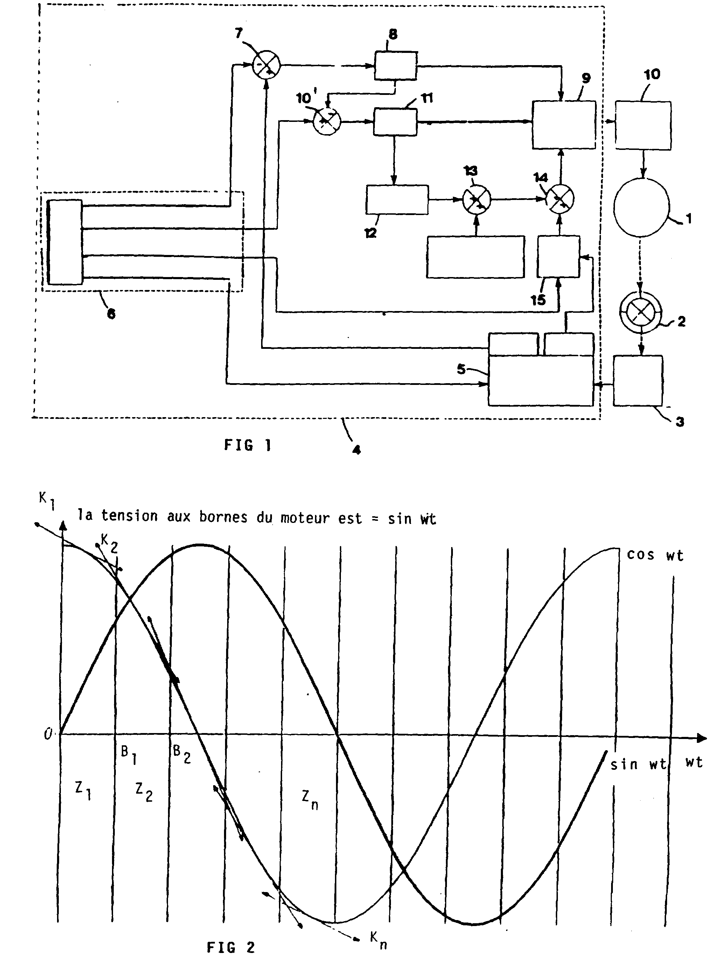

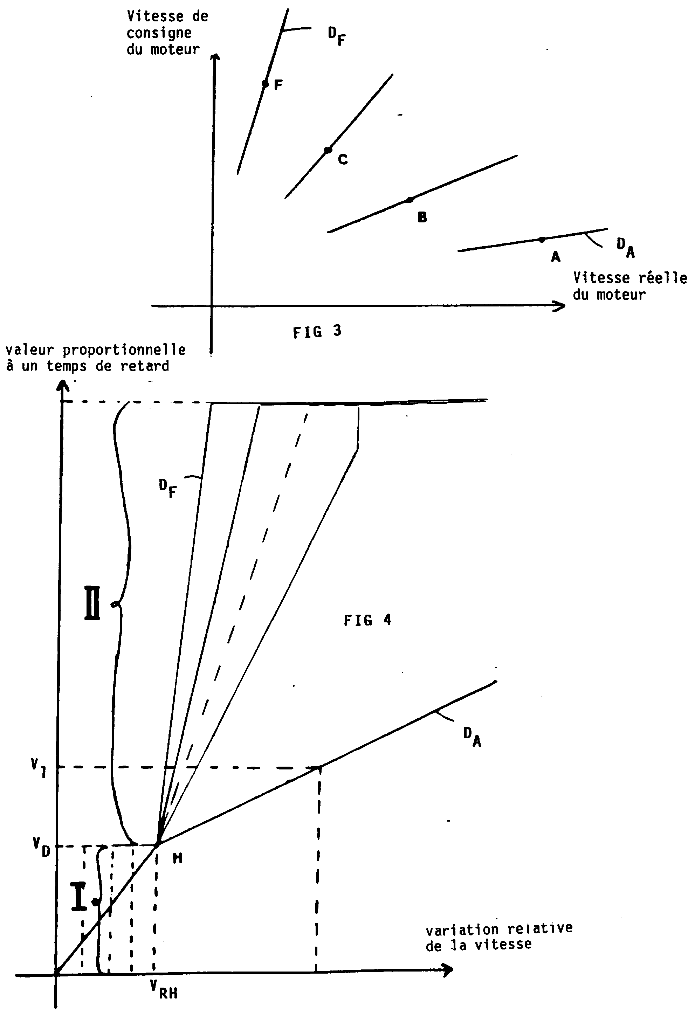

la figure 1 représente un schéma bloc du dispositif d'asservissement numérique de la vitesse d'un moteur selon l'invention ; la figure 2 illustre le fractionnement, selon l'invention, d'une alternance de la courbe de la tension alternative présente aux bornes du moteur électrique ; les figures 3 et 4 représentent des droites de correction, obtenues après un calcul selon l'invention, déterminant une valeur de correction à apporter à la vitesse réelle du moteur pour obtenir la vitesse de consigne désirée.

Selon la figure 1, un moteur 1 destiné à équiper, par exemple, un appareil électroménager est alimenté par un réseau alternatif de distribution électrique non représenté et activé par un élément commutateur connecté en série avec ledit moteur. Ledit moteur tourne à des vitesses différentes en fonction du travail à effectuer, ces vitesses étant généralement sélectionnables par l'utilisateur. Ainsi le moteur subit de fortes variations qui peuvent nuire à sa longévité. Pour améliorer le fonctionnement du moteur et régler la vitesse, un dispositif d'asservissement numérique de la vitesse du moteur commande l'élément commutateur, tel qu'un triac, dont l'angle d'ouverture fait varier la vitesse réelle dudit moteur 1. Un tel dispositif d'asservissement comporte un capteur tachymétrique 2 en liaison avec le moteur et destiné à émettre des impulsions images de la vitesse du moteur vers une interface 3 transmettant lesdites impulsions à un microcontrôleur 4. Le microcontrôleur 4 est, par exemple, un microcontrôleur 8051 de la Société INTEL. Ledit microcontrôleur comprend un générateur de signaux à fréquence constante, par exemple de fréquence 1 Mhz, et un espace mémoire 6 contenant, entre autres, dans une première tranche, N valeurs de vitesses de consigne désirées comprises entre une vitesse minimum V_{MINI} et une vitesse maximum V_{MAXI}, N valeurs déterminées de pente moyenne P_{X}. Lesdites valeurs de pente moyenne Px sont calculées, d'une part, à partir de valeurs de pentes K₁ à K_{N} en des points déterminés sur une alternance de la cosinusoide de la tension alternative aux bornes du moteur et définies pour N Zones obtenues par un découpage théorique d'une alternance de la sinusoïde de la tension alternative aux bornes du moteur, chaque zone Z₁ à Z_{N} découpée étant définie entre deux bornes B₁ et B₂ correspondant chacune à une valeur déterminée d'angle d'ouverture de l'élément commutateur, c'est à dire à des valeurs V_{P} et V_{P} + ₁ de vitesse de consigne désirée et, d'autre part, à partir d'un coefficient énergétique A_{I} proportionnel à une surface restante de la sinusoïde de la tension alternative aux bornes du moteur limitée par une borne B1 d'une zone et le point de passage à zéro de la sinusoïde. Il est possible de définir les pentes K₁ à k_{N} à partir d'une alternance de la sinusoïde de la tension alternative aux bornes du moteur mais, pour des problèmes de signe, on utilise une alternance de la cosinusoide de la tension alternative aux bornes du moteur. Une visualisation de ce découpage est représentée schématiquement sur la figure 2. Dans chaque zone considérée, des valeurs de pente K₁ à K_{N} sont définies à partir de points déterminés sur l'alternance de la cosinusoide de la tension alternative aux bornes du moteur. Le microcontrôleur comporte également des moyens de comptage comprenant un premier compteur 5 s'incrémentant automatiquement, et dont le décompte est subordonné à au moins une période des impulsions images pour calculer la vitesse réelle du moteur, ledit premier compteur 5 donnant une valeur V en fonction d'au moins une ou plusieurs période d'impulsions images à mesurer issues du capteur tachymétrique 2, et le nombre de périodes à prendre en compte étant contenu dans 1' espace mémoire 6 du microcontrôleur et correspondant à une valeur de vitesse de consigne déterminée. La valeur V issue du premier compteur 5 est définie, par exemple, sous forme hexadécimale et comprend une première partie contenant des bits de poids fort et une deuxième partie contenant des bits de poids faible. Le premier compteur 5 est, par exemple, un compteur 16 bits déterminant ainsi un nombre hexadécimal pouvant varier d'une valeur minimale 0000 à une valeur maximale FFFF. Le microcontrôleur 4 comporte également un intégrateur non représenté calculant la valeur de pente moyenne Px en fonction des valeurs de pentes K₁ à K_{N} et du coefficient énergétique A_{I}. Ainsi, par exemple, pour deux zones successives Z₁ et Z₂ de pentes respectives K₁ et K₂ l'intégrateur prélevera une valeur P₁ correspondant à la pente moyenne des zones Z₁ et Z₂, cet exemple étant pris à titre non limitatif. Le fonctionnement du dispositif d'asservissement numérique de la vitesse du moteur électrique 1 est assuré par le microcontroleur 4. Le microcontroleur calcule, grâce à un premier différenciateur 7, un écart entre la vitesse de consigne choisie par l'utilisateur et contenue dans l'espace mémoire 6 et la première partie de la valeur V issue du premier compteur 5, ledit écart étant dénommé plage de correction Pc. Après calcul de la plage de correction Pc, une étude du signe de ladite plage de correction est réalisée par un premier testeur 8. Si le signe de cette plage est négatif, ce qui signifie que le moteur tourne trop vite, on envoie audit moteur une correction correspondant à une variation de puissance énergétique minimum qui provoque un temps de retard Trmaxi à l'excitation de la gâchette de l'élément commutateur. Le temps de retard est introduit dans le processus de fonctionnement par un deuxième compteur 9 ayant une valeur maximale et activé à une valeur de chargement déterminé par le calcul de la correction minimum. Ce temps de retard est ainsi égal à la différence entre la valeur maximale du deuxième compteur 9 et la correction calculée correspondant à la valeur de chargement dudit compteur 9. On contrôle la sortie du deuxième compteur 9 surveillant le déclenchement d'un signal de dépassement de la valeur maximale. Ledit signal de dépassement est stockée par un moyen de stockage non représenté qui déclenche, d'une part, une interruption du programme principal de fonctionnement du microcontrôleur 4 et, d'autre part, la mise en fonctionnement d'un programme secondaire, envoyant, par exemple grâce à une interface 10, une impulsion d'activation à la gâchette de l'élément commutateur pour corriger s'il y a lieu la vitesse du moteur. Dans un exemple particulier de réalisation, le deuxième compteur 9 est, par exemple, un compteur 16 bits. Ledit compteur 9 est chargé, par exemple, à sa valeur maximale FFFF à laquelle on retranche une valeur hexadécimale XXXX le résultat de la différence étant inférieure à E900 et correspondant à la valeur du temps de retard T_{RmaXi}. En fonctionnement, le deuxième compteur 9 démarre à la valeur FFFF-XXXX. Ensuite le compteur s'incrémente et lors du passage de la valeur maximale FFFF à la valeur minimale 0000, ledit deuxième compteur 9 émet, par exemple, un bit d'interruption qui provoque dans le programme principal de fonctionnement une interruption et déclenche ledit programme secondaire envoyant une impulsion correspondant à une puissance minimum. Après chaque impulsion d'activation, le moteur tourne à une vitesse réelle déterminée qui est recalculée à chaque alternance de fonctionnement en fonction de la vitesse de consigne désirée. Ledit temps de retard est également recalculé à chaque alternance de fonctionnement en fonction de la vitesse désirée. Ce nouveau temps de retard est retranché à la valeur FFFF du deuxième compteur 9 et le même procédé de traitement est réalisé. D'autres types de compteurs peuvent être utilisés et des méthodes de calcul appropriées peuvent être adaptées pour obtenir un même résultat.

Si le signe de la plage de correction est positif ou nul, le microcontroleur 4 compare, grâce à un deuxième différenciateur 10', la plage de correction calculée par ledit microcontroleur avec une plage de correction maximum Pcm contenue dans 1' espace mémoire 6, fixée pour chaque valeur de vitesse de consigne désirée et correspondant à la différence de vitesse entre la vitesse réelle du moteur et la vitesse de consigne désirée, la différence étant une variation relative. Le deuxième différenciateur 10' donne ainsi une valeur appelée mode de correction Mc sur laquelle on effectue un test du signe par un deuxième testeur 11. Si le signe du mode de correction Mc est négatif ou nul c'est à dire si le moteur tourne trop lentement, on envoie une correction correspondant à une variation de puissance maximale à appliquer audit moteur.

On assimile à ladite correction un temps de retard Trmini à appliquer à l'élément commutateur et on effectue la même démarche que celle décrite précédemment avec le temps de retard Trmaxi. Dans notre exemple particulier, la valeur hexadécimale correspondant à la valeur du temps de retard Trmini est la valeur FFFF-FB00. Si le signe du mode de correction est positif, c'est à dire si le moteur tourne à une vitesse proche de la vitesse de consigne désirée, on déclenche le calcul d'une valeur de correction à appliquer à la vitesse réelle du moteur pour fonctionner à la vitesse de consigne désirée. Si le signe du mode de correction est positif, c'est à dire si le moteur tourne à une vitesse proche de la vitesse de consigne désirée, on déclenche le calcul d'une valeur de correction à appliquer à la vitesse réelle du moteur pour fonctionner à la vitesse de consigne désirée.

Pour obtenir cette valeur de correction, on multiplie, grâce à un multiplicateur 12, une valeur de pente moyenne Px associée à la vitesse de consigne déterminée par la valeur de la plage de correction calculée par le premier différenciateur, on ajoute au produit ainsi obtenu, grâce à un premier sommateur 13, une valeur d'origine en dessous de laquelle l'appareil équipé d'un moteur n'a pas de fonctions utilitaires et correspondant, dans notre exemple, à une valeur hexadécimale E9, et on additionne, grâce à un deuxième sommateur 14, ledit résultat du premier sommateur 13 avec le produit calculé par un multiplicateur 15 entre la valeur de pente moyenne Px associée à la vitesse de consigne désirée et la deuxième partie de la valeur V issue du premier compteur 5. Ladite valeur de correction calculée après le sommateur 14 est appliquée audit deuxième compteur 9.

La valeur de correction peut être retrouvée graphiquement par des droites de correction représentées sur les figures 3 et 4. Selon les figures 3 et 4, différentes droites de correction (Dₐ, ...n D_{F}) ont été représentées, à titre illustratif, suivant des points de positionnement différents (A, B, C, ..., F). En effet, les droites de correction D_{A} à D_{F} de la figure 3, sont définies, d'une part, suivant l'axe des abscisses, par la valeur V issue du premier compteur 5 représentant la vitesse réelle du moteur et, d'autre part, suivant l'axe des ordonnées, par des valeurs de vitesse de consigne contenues dans l'espace mémoire 6. Chaque droite de correction a une valeur de pente moyenne P₁ à P_{N} déterminée qui est différente suivant le point de fonctionnement (A, B, C, F) c'est à dire suivant la vitesse de consigne désirée. La droite de correction ayant A comme point de fonctionnement correspond à une faible valeur de la vitesse de consigne et à un valeur V très élevée représentant la vitesse réelle du moteur. Cette droite de correction a une pente moyenne très faible. Pour des vitesses de consigne élevées et une valeur V faible, la droite de correction a une forte pente moyenne. Les droites de correction de la figure 4 possèdent toujours les mêmes pentes moyennes que celles représentées à la figure 3 mais sont représentées avec une changement d'échelle pour améliorer la correction à apporter en fonction des faibles écarts de vitesse difficiles à analyser. Les droites de correction sont représentées dans un repère ayant, comme axe des abscisses la variation relatives de la vitesse entre la vitesse réelle du moteur et la vitesse de consigne, et comme axe des ordonnées, la valeur associée au temps de retard, ladite valeur étant convertie, par exemple, sous forme hexadécimale. Chaque droite de correction représentée à titre illustratif, possède une première partie I commune à toutes les droites et correspondant à une plage obtenue lorsque le moteur tourne rapidement, un point d'inflexion H commun à toutes les droites et une deuxième partie II dont les pentes moyennes de droites varient en fonction de la vitesse de consigne désirée. Suivant la valeur de la vitesse de consigne désirée et suivant la variation relative de la vitesse du moteur, un valeur V₁ proportionnel à un temps de retard, est définie, par exemple, sous forme hexadécimal, grâce à une droite de correction déterminée en fonction de la valeur de pente moyenne associée à la valeur de la vitesse de consigne désirée. Ladite valeur V₁ est ensuite transmise au deuxième compteur 9 qui déclenche un processus de fonctionnement comme décrit précédemment.

De cette manière, l'invention assure une correction énergétique proportionnelle au calcul de la pente moyenne des droite de corrections.

L'invention peut s'appliquer à tout type de moteur fonctionnant avec des fortes variations de vitesse lors d'application de couple variés notamment sur les moteurs des machines de traitement des aliments, dans lesquels pour hacher, battre centrifuger ou presser, les aliments les vitesses sont très différentes ainsi que sur tous les appareils électrodomestiques, tels que par exemple un aspirateur.

## Revendications

1. Dispositif d'asservissement numérique de la vitesse d'un moteur électrique (1) comportant un élément commutateur, tel qu'un triac, monté en série avec le moteur aux bornes d'un réseau alternatif de distribution électrique et dont l'angle d'ouverture définie des valeurs correspondant à une vitesse de consigne déterminée, un capteur tachymétrique (2) en liaison avec le moteur et destiné à émettre des impulsions images de la vitesse du moteur, ainsi qu'un microcontroleur (4) comprenant un générateur de signaux à fréquence constante, des moyens de comptage d'un premier compteur (5) s'incrémentant automatiquement et dont le décompte est subordonné à au moins une période des impulsions images pour calculer la vitesse réelle du moteur, un espace mémoire (6) contenant N valeurs de vitesses de consigne désirées comprises entre une vitesse minimum V_{MINI} et une vitesse maximum V_{MAXI}, des moyens de comparaison entre la vitesse de consigne désirée et la vitesse réelle du moteur, des moyens de traitement de l'information issue des moyens de comparaison, et des moyens de conversion de l'information analysée destinés à commander l'angle d'ouverture de l'élément commutateur,
**caractérisé en ce que** l'espace mémoire (6) du microcontroleur (4) comporte, dans une première tranche, N valeurs déterminées de pente moyenne Px calculées, d'une part, à partir de valeurs de pentes K₁ à K_{N} en des points déterminés sur une alternance d'une courbe représentative de la tension alternative aux bornes du moteur et définies pour N zones (Z₁, à Zₙ) obtenues par un découpage théorique d'une alternance de la courbe de la tension alternative aux bornes du moteur et, d'autre part, à partir de coefficients énergétiques Aᵢ proportionnels à une surface restante de ladite courbe de la tension alternative aux bornes du moteur limitée par une borne d'une zone et le point de passage par zéro de ladite courbe de la tension alternative aux bornes du moteur et, dans une seconde tranche, N valeurs de plage de correction maximum (P_{cm}) déterminées pour chaque valeur de vitesse de consigne désirée et correspondant à une différence de vitesse entre la vitesse réelle du moteur et la vitesse de consigne désirée.

2. Dispositif d'asservissement numérique de la vitesse d'un moteur électrique selon la revendication 1, **caractérisé en ce que** les valeurs de pentes K₁ à K_{N} sont définies sur une alternance de la cosinusoide de la tension alternative aux bornes du moteur et les N zones sont définies sur une alternance de la sinusoïde de la tension alternative.

3. Dispositif d'asservissement numérique de la vitesse d'un moteur électrique selon la revendication 1, **caractérisé en ce que** l'espace mémoire (6) du microcontroleur (4) comporte, pour chacune des N valeurs de vitesses de consigne, un nombre déterminé de périodes des impulsions images à mesurer.

4. Dispositif d'asservissement numérique de la vitesse d'un moteur électrique selon la revendication 1, **caractérisé en ce que** l'espace mémoire (6) mémorise une valeur V proportionnelle à la vitesse réelle du moteur et comprenant une première partie contenant des bits de poids faible et une deuxième partie contenant des bits de poids fort.

5. Dispositif d'asservissement numérique de la vitesse d'un moteur électrique selon la revendication 4, **caractérisé en ce que** ladite valeur V proportionnelle à la vitesse réelle du moteur est définie sous forme hexadécimale.

6. Dispositif d'asservissement numérique selon l'une quelconque des revendications précédentes, **caractérisé en ce que** le microcontroleur (4) comporte un deuxième compteur (9) calculant une valeur de correction à apporter à l'élément commutateur à partir des N valeurs de pente moyenne Px , des N valeurs de plage de correction maximum Pcm et d'un nombre déterminé de périodes des impulsions images contenus dans l'espace mémoire (6).

7. Dispositif d'asservissement numérique selon l'une quelconque des revendications précédentes,
**caractérisé en ce que** le premier compteur (5) et le deuxième compteur (9) sont des compteurs 16 bits.

8. Utilisation du dispositif d'asservissement numérique selon l'une des revendications précédentes pour
équiper le moteur d'un appareil électroménager tel que, par exemple, une machine de traitement des aliments à plusieurs fonctions telles que hachoir, diviseur, presse-fruits, centrifugeuse à fruits, pétrisseur ou un aspirateur.

9. Procédé de fonctionnement du dispositif d'asservissement numérique de la vitesse d'un moteur électrique selon la revendication 6,
caractérisé en ce qu'on calcule une plage de correction (P_{C}) définie par la différence entre la vitesse de consigne choisie par l'utilisateur et la première partie de la valeur V issue du premier compteur (5), on effectue un test sur le signe de la plage de correction (Pc) et on applique une correction déterminée à l'angle de l'ouverture de l'élément commutateur en fonction du signe de ladite plage (Pc) par l'intermédiaire du deuxième compteur (9).

10. Procédé de fonctionnement du dispositif d'asservissement numérique de la vitesse d'un moteur électrique selon la revendication 9,
**caractérisé en ce que**, si le signe de la plage de correction est négatif on envoie une correction minimum correspondant à une variation énergétique minimum et, si le signe de la plage de correction est positif ou nul ; on compare la plage de correction Pc calculée par le microcontroleur (4) avec une plage de correction maximum Pcm contenue dans l'espace mémoire (6), on en déduit une valeur de correction Mc ; on teste le signe du mode de correction Mc, si le mode de correction est négatif ou nul, on applique une correction maximum correspondant à une variation énergétique maximum, si le mode de correction Mc est positif, on calcule le produit d'une valeur de pente moyenne Px associée à une vitesse de consigne déterminée par la valeur de la plage de correction Pc calculée par le microcontroleur (4) ; on ajoute au produit obtenu une valeur d'origine déterminée ; on additionne à ce résultat un produit réalisé entre la valeur de pente moyenne Px et la deuxième partie de la valeur V issue du premier compteur (5).

11. Procédé de fonctionnement du dispositif d'asservissement numérique de la vitesse d'un moteur électrique selon la revendication 9,
**caractérisé en ce que**, la correction déterminée étant un nombre, on charge le deuxième compteur (9) par ledit nombre ; on déclenche le fonctionnement du deuxième compteur (9) ; on atteint la valeur maximale du deuxième compteur (9) ; lors du dépassement de ladite valeur maximale à la valeur minimale du deuxième compteur (9), on utilise un bit de dépassement dudit deuxième compteur (9) qui déclenche une interruption du programme principal de fonctionnement du microcontroleur (4) ainsi que l'activation d'un programme secondaire envoyant une impulsion d'activation à la gâchette de l'élément commutateur.

## Patentansprüche

1. Vorrichtung zur digitalen Regelung der Geschwindigkeit eines Elektromotors (1), die die folgenden Merkmale aufweist:
ein Schaltelement wie einen Triac, das an den Anschlüssen eines Wechselspannungsnetzes zur Verteilung von Elektrizität in Reihe mit dem Motor geschaltet ist und dessen Öffnungswinkel entsprechende Werte festlegt, die einer bestimmten Einstellwertgeschwindigkeit entsprechen,
einen Drehzahlsensor (2), der mit dem Motor in Verbindung steht und der dafür bestimmt ist, Vertikalimpulse der Geschwindigkeit des Motors auszusenden,
einen Microcontroller (4), der einen Signalgenerator mit konstanter Frequenz beinhaltet,
Zählmittel eines ersten Zählers (5), die sich automatisch inkrementieren und deren Zählschritt an mindestens eine Periode der Vertikalimpulse geknüpft ist, um die wahre Geschwindigkeit des Motors zu berechnen,
einen Speicher (6), der N Werte von gewünschten Einstellwertgeschwindigkeiten zwischen einer Minimalgeschwindigkeit V_{MINI} und einer Maximalgeschwindigkeit V_{MAXI} enthält,
Vergleichsmittel zum Vergleich der gewünschten Einstellwertgeschwindigkeit mit der wahren Geschwindigkeit,
Verarbeitungsmittel zur Verarbeitung der aus den Vergleichsmitteln hervorgegangenen Information, und
Umwandlungsmittel zur Umwandlung der analysierten Information, die dafür bestimmt sind, den Öffnungswinkel des Schaltelements zu steuern,
**dadurch gekennzeichnet, daß**
der Speicher (6) des Microcontrollers (4)
- in einer ersten Scheibe N vorbestimmte Werte mit mittlerer Steigung Px aufweist, die zum einen ausgehend von Steigungswerten K₁ bis K_{N} in vorbestimmten Punkten auf einer Halbwelle einer typischen Kurve der Wechselspannung an den Anschlüssen des Motors berechnet werden und die für N Zonen (Z₁ bis Z_{N}) festgelegt sind, die durch ein theoretisches Aufteilen einer Halbwelle der Wechselspannung an den Anschlüssen des Motors erhalten werden, und die zum anderen ausgehend von energetischen Koeffizienten Aᵢ berechnet werden, die proportional zu einer Restfläche der besagten Kurve der Wechselspannung an den Anschlüssen des Motors sind, die durch einen Anschluß einer Zone und durch den Durchgangspunkt durch Null der besagten Wechselspannungskurve an den Anschlüssen des Motors begrenzt wird, und
- in einer zweiten Scheibe N Bereichswerte maximaler Korrektur (P_{cm}) aufweist, die für jeden gewünschten Wert der Einstellwertgeschwindigkeit vorbestimmt sind und die einer Geschwindigkeitsdifferenz zwischen der wahren Geschwindigkeit des Motors und der gewünschten Einstellwertgeschwindigkeit entsprechen.

2. Vorrichtung zur digitalen Regelung der Geschwindigkeit eines Elektromotors gemäß Anspruch 1,
**dadurch gekennzeichnet, daß** die Steigungswerte K₁ bis K_{N} auf einer Halbwelle der Cosinuskurve der Wechselspannung an den Anschlüssen des Motors festgelegt sind, und dadurch, daß die N Zonen auf einer Halbwelle der Sinuskurve der Wechselspannung festgelegt sind.

3. Vorrichtung zur digitalen Regelung der Geschwindigkeit eines Elektromotors gemäß Anspruch 1,
**dadurch gekennzeichnet, daß** der Speicher (6) des Microcontrollers (4) für jeden der N Werte der Einstellwertgeschwindigkeiten eine vorbestimmte Anzahl von zu messenden Vertikalimpulsperioden aufweist.

4. Vorrichtung zur digitalen Regelung der Geschwindigkeit eines Elektromotors gemäß Anspruch 1,
**dadurch gekennzeichnet, daß** der Speicher (6) einen Wert V speichert, der proportional zur wahren Geschwindigkeit des Motors ist und der einen ersten Teil mit Bits geringerer Wertigkeit und einen zweiten Teil mit Bits höherer Wertigkeit enthält.

5. Vorrichtung zur digitalen Regelung der Geschwindigkeit eines Elektromotors gemäß Anspruch 4,
**dadurch gekennzeichnet, daß** der besagte Wert V, der proportional zur wahren Geschwindigkeit des Motors ist, in hexadezimaler Form festgelegt ist.

6. Vorrichtung zur digitalen Regelung der Geschwindigkeit eines Elektromotors gemäß einem der vorhergehenden Ansprüche,
**dadurch gekennzeichnet, daß** der Microcontroller (4) einen zweiten Zähler (9) aufweist, der einen dem Schaltelement zuzuführenden Korrekturwert berechnet, und zwar ausgehend von den N Werten Px mittlerer Steigung, von den N Bereichswerten Pcm maximaler Korrektur und von der vorbestimmten Anzahl von Vertikalimpulsperioden, die im Speicher (6) enthalten sind.

7. Vorrichtung zur digitalen Regelung der Geschwindigkeit eines Elektromotors gemäß einem der vorhergehenden Ansprüche,
**dadurch gekennzeichnet, daß** der erste Zähler (5) und der zweite Zähler (9) 16-Bit-Zähler sind.

8. Verwendung der Vorrichtung zur digitalen Regelung gemäß einem der vorhergehenden Ansprüche zum Ausrüsten des Motors eines Elektrohaushaltsgerätes wie zum Beispiel einer Lebensmittel-Verarbeitungsmaschine mit mehreren Funktionen wie Fleischwolf, Zerkleinerer, Fruchtpresse, Saftzentrifuge, Knetmaschine oder eines Staubsaugers.

9. Verfahren zum Betrieb der Vorrichtung zur digitalen Regelung der Geschwindigkeit eines Elektromotors gemäß Anspruch 6,
**dadurch gekennzeichnet, daß** ein Korrekturbereich (P_{c}) berechnet wird, der durch die Differenz der durch den Anwender gewählten Einstellwertgeschwindigkeit und des ersten Teils des aus dem ersten Zähler (5) hervorgegangenen Wertes V festgelegt wird,
daß ein Test auf das Vorzeichen des Korrekturbereiches (Pc) ausgeführt wird und daß mittels des zweiten Zählers (9) eine vorbestimmte Korrektur des Öffnungswinkels des Schaltelements bewirkt wird, und zwar in Abhängigkeit vom Vorzeichen des besagten Bereichs (Pc).

10. Verfahren zum Betrieb der Vorrichtung zur digitalen Regelung der Geschwindigkeit eines Elektromotors gemäß Anspruch 9,
**dadurch gekennzeichnet, daß** - falls das Vorzeichen des Korrekturbereichs negativ ist - eine Minimalkorrektur geschickt wird, die einer minimalen Energievariation entspricht, und daß - falls das Vorzeichen des Korrekturbereichs positiv oder gleich Null ist - der durch den Microcontroller (4) berechnete Korrekturbereich Pc mit einem im Speicher (6) enthaltenen Maximal korrekturbereich Pcm verglichen wird;
daß daraus ein Korrekturwert Mc hergeleitet wird;
daß das Vorzeichen des Korrekturwertes Mc bestimmt wird,
daß - wenn der Korrekturwert negativ oder gleich Null ist - eine Maximalkorrektur angewandt wird, die einer maximalen Energievariation entspricht, daß - wenn der der Korrekturwert Mc positiv ist - das Produkt eines mittleren Steigungswertes Px berechnet wird, der mit einer Einstellwertgeschwindigkeit verbunden ist, die durch den durch den Microcontroller (4) berechneten Korrekturbereichswert bestimmt wird;
daß zu dem erhaltenen Produkt ein bestimmter, ursprünglicher Wert hinzugefügt wird; und
daß zu diesem Ergebnis ein Produkt addiert wird, das aus dem mittleren Steigungswert Px und dem zweiten Teil des aus dem zweiten Zähler (5) hervorgegangenen Wertes V gebildet wird.

11. Verfahren zum Betrieb der Vorrichtung zur digitalen Regelung der Geschwindigkeit eines Elektromotors gemäß Anspruch 9, **dadurch gekennzeichnet, daß** die vorbestimmte Korrektur eine Zahl ist, wobei der zweite Zähler (9) mit der besagten Zahl geladen wird; daß der Betrieb des zweiten Zählers (9) ausgelöst wird, daß der Maximalwert des zweiten Zählers (9) abgewartet wird, daß beim Überlaufen des zweiten Zählers (9) von besagtem Maximalwert zum Minimalwert ein Überlaufbit des besagten Zählers (9) verwendet wird, das sowohl eine Unterbrechung des Hauptbetriebsprogramms des Microcontrollers (4) als auch die Aktivierung eines Sekundärprogramms auslöst, das einen Aktivierungsimpuls zum Gate des Schaltelements schickt.

## Claims

1. Device for the numerical control of the speed of an electric motor (1) having a switching component, such as a triac, connected in series with the motor to the terminals of an AC electrical distribution network and whose angle of opening defines values corresponding to a predetermined set speed, a tachometric sensor (2) connected to the motor and designed to emit pulses which are images of the speed of the motor, and a microcontroller (4) comprising a constant frequency signal generator, counting means of a first counter (5) incrementing automatically and whose counting is dependent on at least one period of the image pulses in order to calculate the actual speed of the motor, a memory space (6) containing N values of desired set speeds lying between a minimum speed V_{MINI} and a maximum speed V_{MAXI}, means of comparison between the desired set speed and the actual speed of the motor, means for processing the information coming from the comparison means and means for converting the information analysed, designed to control the angle of opening of the switching component,
characterised in that the memory space (6) of the microprocessor (4) contains, in a first section, N mean gradient values Px calculated, on the one hand, from gradient values K₁ to K_{N} at predetermined points on a half-cycle of a curve representing the AC voltage at the terminals of the motor and defined for N zones (Z₁ to Zₙ) obtained by a theoretical division of a half-cycle of the curve of the AC voltage at the terminals of the motor and, on the other hand, from energy coefficients Aᵢ proportional to a residuary area of the said curve of the AC voltage at the terminals of the motor limited by a boundary of a zone and the zero crossing point of the said curve of the AC voltage at the terminals of the motor and, in a second section, N maximum correction range values (P_{cm}) determined for each desired set speed value and corresponding to a difference in speed between the actual speed of the motor and the desired set speed.

2. Device for the numerical control of the speed of an electric motor according to Claim 1, characterised in that the gradient values K₁ to K_{N} are defined on a half-cycle of the cosine curve of the AC voltage at the terminals of the motor and the N zones are defined on a half-cycle of the sinusoid of the AC voltage.

3. Device for the numerical control of the speed of an electric motor according to Claim 1, characterised in that the memory space (6) of the microcontroller (4) contains, for each of the N set speed values, a predetermined number of periods of the image pulses to be measured.

4. Device for the numerical control of the speed of an electric motor according to Claim 1, characterised in that the memory space (6) stores a value V proportional to the actual speed of the motor and comprising a first part containing least significant bits and a second part containing most significant bits.

5. Device for the numerical control of the speed of an electric motor according to Claim 4, characterised in that the said value V proportional to the actual speed of the motor is defined in hexadecimal form.

6. Numerical control device according to any one of the preceding claims, characterised in that the microcontroller (4) includes a second counter (9) calculating a correction value to be applied to the switching component from the N mean gradient values Px, the N maximum correction range values Pcm and a predetermined number of periods of the image pulses contained in the memory space (6).

7. Numerical control device according to any one of the preceding claims, characterised in that the first counter (5) and the second counter (9) are 16-bit counters.

8. Use of the numerical control device according to any one of the preceding claims for equipping the motor of a domestic electrical appliance such as, for example, a food processing machine with several functions such as a chopper, divider, liquidiser, fruit centrifuge or mixer, or a vacuum cleaner.

9. Operating method for the device for the numerical control of the speed of an electric motor according to Claim 6, characterised in that a correction range (P_{C}) is calculated, defined by the difference between the set speed chosen by the user and the first part of the value V coming from the first counter (5), a test is carried out on the sign of the correction range (Pc) and a predetermined correction is applied to the angle of opening of the switching component as a function of the sign of the said range (Pc) by means of the second counter (9).

10. Operating method for the device for the numerical control of the speed of an electric motor according to Claim 9, characterised in that, if the sign of the correction range is negative, a minimum correction corresponding to a minimum energy variation is sent and, if the sign of the correction range is positive or null; the correction range Pc calculated by the microcontroller (4) is compared with a maximum correction range Pcm contained in the memory space (6), a correction value Mc is derived therefrom; the sign of the correction mode Mc is tested, if the correction mode is negative or null, a maximum correction corresponding to a maximum energy variation is applied, if the correction mode Mc is positive, the product of a mean gradient value Px associated with a predetermined set speed and the value of the correction range Pc calculated by the microcontroller (4) is calculated; a predetermined origin value is added to the product obtained; a product of the mean gradient value Px and the second part of the value V coming from the first counter (5) is added to this result.

11. Operating method for the device for the numerical control of the speed of an electric motor according to Claim 9, characterised in that, the predetermined correction being a number, the said number is loaded into the second counter (9); the operation of the second counter (9) is triggered; the maximum value of the second counter (9) is attained; when the said maximum value is exceeded at the minimum value of the second counter (9), an overflow bit of the said second counter (9) is used, which triggers an interruption of the main operating program of the microcontroller (4) and the activation of a secondary program sending an activation pulse to the gate of the switching component.
